# EUROPEAN PATENT SPECIFICATION

(11) **EP 4 393 727 B1**
(45) Date of publication and mention of the grant of the patent: **04.02.2026**
(21) Application number: 23218004.2
(22) Date of filing: 19.12.2023
(51) Int. Cl.: B60C 11/03, B60C 11/13

(54) **PNEUMATIC TIRE**
LUFTREIFEN
PNEUMATIQUE

(30) Priority: 28.12.2022 JP 2022211100
(43) Date of publication of application: 03.07.2024
(73) Proprietor: TOYO TIRE CORPORATION, Itami-shi, Hyogo 6640847 (JP)
(72) Inventor: ISHIHARA, Seiya, Itami-shi, 6640847 (JP)
(74) Representative: von Hirschhausen, Helge

(56) References cited:
- EP-A1- 3 450 215
- EP-A1- 3 904 120
- US-A1- 2020 130 418
- US-A1- 2021 347 207

## Description

### TECHNICAL FIELD

The present invention relates to a pneumatic tire, and in particular to a pneumatic tire for which a direction of rotation is designated.

### BACKGROUND

In the related art, directional tires are known for which a direction of rotation of the tire is designated. For example, JP 2010-280355 A discloses a directional tire in which, from the viewpoint of improving braking performance, side surfaces on both a leading side and a trailing side of a block forming a tread pattern are inclined in the direction of rotation of the tire.

An example of a tire with a tread portion including a row of blocks arranged in a tire circumferential direction divided by lateral grooves is disclosed in EP 3 904 120 A1. Herein, each block includes a block tread surface, a first block sidewall surface located on a leading side in a rotation direction of the block, and a leading-side corner portion between the block tread surface and the first block sidewall surface. The leading-side corner portion includes a first portion and a second portion extending in a tire axial direction. The first portion is formed sharper than the second portion. In a plan view of each block, an angle θ1 of the first portion to the tire circumferential direction is larger than an angle θ2 of the second portion to the tire circumferential direction.

Another example of a tire with a tread is disclosed in US 2021/ 034 207 A1. The tread comprises a sequence of tread elements forming an overall "V" shape with two lateral wings. Each of said wings is formed from three tread blocks separated therebetween by first and second grooves. Said three tread blocks comprise at least one shoulder block provided with at least a first sipe having a "zig-zag" shape and each shoulder block further comprises a channel with a longitudinally evolution which extends on the shoulder block, until it reaches and emerges upon the corresponding second groove. The channel with a longitudinal evolution comprises an end portion that opens onto said second groove. The end portion has a variable depth and the terminal portion has at least one inclined portion.

The document EP 3 450 215 A1 discloses a tire with a tread surface. The tread surface includes a circumferential groove extending in a tire circumferential direction, a lug groove extending in a direction intersecting the circumferential groove and a plurality of land parts partitioned by the circumferential groove and the lug groove. A width-direction groove extending in a tire widthwise direction is formed on a land part of the plurality of land parts, and an in-groove sipe is arranged along one side edge of a groove bottom of the width-direction groove.

However, for the pneumatic tire, traction performance is demanded not only during braking, but also during driving. The tread pattern of the directional tire disclosed in JP 2010-280355 A may be considered as having degraded traction performance during driving, and there remains room for improvement in the traction performance.

An advantage of the present invention lies in provision of a pneumatic tire in which the traction performance is improved.

### SUMMARY

According to one aspect of the present invention, there is provided a pneumatic tire including the features of claim 1.

The pneumatic tire according to an aspect of the present invention has a superior traction performance. The pneumatic tire according to an aspect of the present invention is suitable for an all-season tire.

### BRIEF DESCRIPTION OF DRAWINGS

Embodiment(s) of the present invention will be described based on the following figures, wherein:
- FIG. 1: is a perspective diagram showing a part of a pneumatic tire according to an embodiment of the present invention;
- FIG. 2: is a plan view of the pneumatic tire according to the embodiment of the present invention;
- FIG. 3: is a diagram showing a part of a tread pattern (region A in FIG. 2) in an enlarged manner;
- FIG. 4A: is a front cross-sectional view, viewing in a direction A-A of FIG. 3;
- FIG. 4B: is a diagram corresponding to FIG. 4A and showing another configuration of the embodiment of the present invention;
- FIG. 4C: is a diagram corresponding to FIG. 4A and showing another configuration of the embodiment of the present invention; and
- FIG. 5: is a cross-sectional view along a line B-B of FIG. 3.

### DESCRIPTION OF EMBODIMENTS

A pneumatic tire according to an embodiment of the present invention will now be described in detail with reference to the drawings. The embodiment described below is merely exemplary, and the present invention is not limited to the embodiment described below. Further, selective combination of various constituting elements of a plurality of embodiments and alternative configurations described below is within the scope of the present invention.

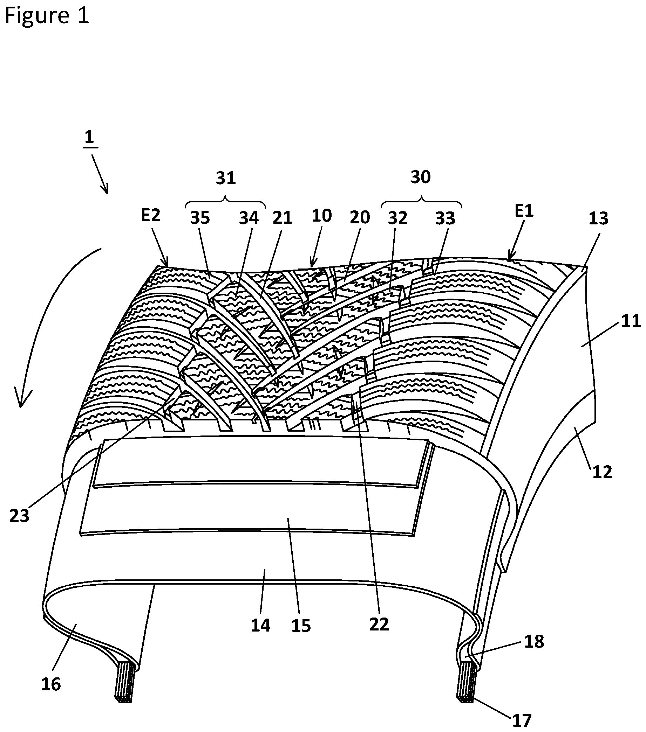

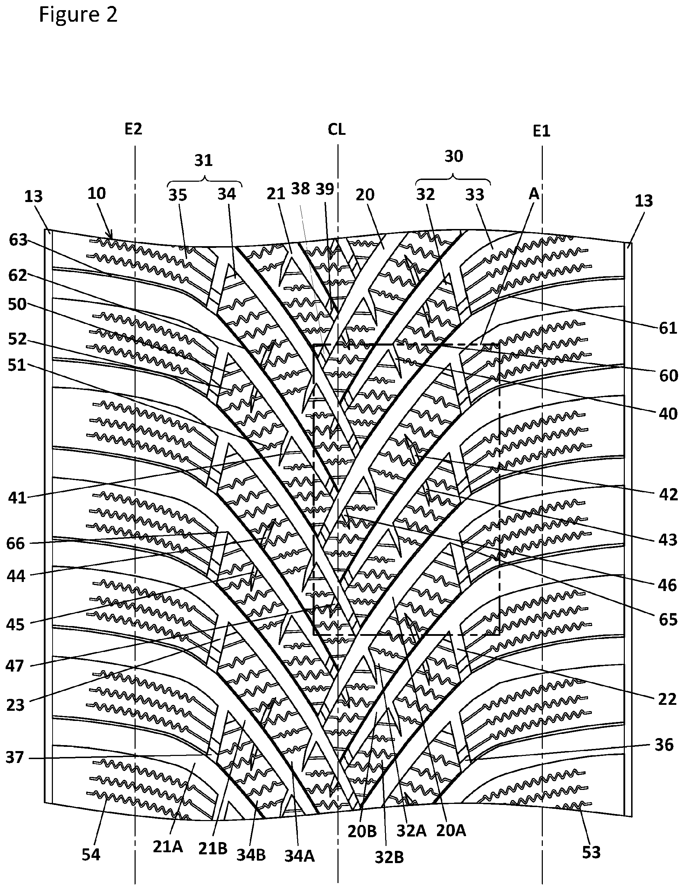

FIG. 1 is a perspective diagram showing a part of a pneumatic tire 1 according to an embodiment of the present invention. FIG. 1 also shows an internal structure of the tire. As shown in FIG. 1, the pneumatic tire 1 has a tread 10 which is a portion which contacts the road surface. The tread 10 includes main grooves 20 and 21 which extend from a side of an equator CL (refer to FIG. 2) to sides of ground-contacting ends, and which have inclination angles with respect to a tire axial direction which are larger on the side of the equator CL than on the sides of the ground-contacting ends, and blocks 30 and 31 formed respectively along the main grooves 20 and 21. The main groove 20 and the block 30 extend from the side of the equator CL to a side of a ground-contacting end E1, and the main groove 21 and the block 31 extend from the side of the equator CL to a side of a ground-contacting end E2.

The equator CL means a line along a tire circumferential direction and which passes through an exact center (a position of equal distance from the ground-contacting ends E1 and E2) of the tread 10 in the tire axial direction. In the present invention, the ground-contacting ends E1 and E2 refer to respective ends, in the tire axial direction, of a region contacting a flat road surface when a predetermined load is applied in a state in which the pneumatic tire 1 which is not yet used is fitted on a regular rim and filled with air to achieve a regular internal pressure. In the case of a tire for passenger cars, the predetermined load is a load corresponding to 88% of a regular load.

Here, the "regular rim" refers to a rim determined by a tire standard, and is defined as a "standard rim" in JATMA, and a "Measuring Rim" in TRA and ETRTO. The "regular internal pressure" is defined as a "maximum pneumatic pressure" in JATMA, a maximum value described in the table, "TIRE LOAD LIMITS AT VARIOUS COLD INFLATION PRESSURES" in TRA, and an "INFLATION PRESSURE" in ETRTO. The regular internal pressure is normally set to 180 kPa in the case of the tire for passenger cars, and is set to 220 kPa in the case of tires labeled "Extra Load" or "Reinforced". The "regular load" is defined as a "maximum load capability" in JATMA, a maximum value described in the table, "TIRE LOAD LIMITS AT VARIOUS COLD INFLATION PRESSURES" in TRA, and a "LOAD CAPACITY" in ETRTO. In the case of a tire for racing carts, the regular load is 392 N.

The pneumatic tire 1 is a directional tire in which a direction of rotation is designated. FIG. 1 illustrates an arrow showing the direction of rotation of the tire. In the present invention, the "direction of rotation" of the tire refers to a rotational direction of the tire during forward travel of a vehicle on which the tire is fitted. Further, in the present specification, for convenience of description, terms of "left" and "right" will be used with respect to the direction of rotation. The left and right in the present invention mean left and right directions when viewed in the direction of travel of the vehicle in a state in which the tire is fitted on the vehicle. The pneumatic tire 1 desirably has an indication indicating a direction of fitting with respect to the vehicle. On a side surface of the pneumatic tire 1, for example, at least one of a text or an arrow indicating the direction of rotation is provided.

The tread 10 has a tread pattern in which the blocks 30 and 31 are placed in a staggered manner along the tire circumferential direction. Large parts of the blocks 30 and 31 are placed in a separated manner on left and right of the tread 10 with the equator CL therebetween.

The block 30 is formed along the main groove 20, and is placed alternately with the main groove 20 in the tire circumferential direction. The blocks 30 are more specifically a pair of blocks including a center block 32 positioned on the side of the equator CL (a first block) and a shoulder block 33 positioned on the side of the ground-contacting end E1 (a second block). Between the center block 32 and the shoulder block 33, a sub groove 22 which connects two main grooves 20 in the tire rotational direction is formed, and the sub-groove 22 partitions the block 30 into two blocks. As will be described later in detail, on a part of the sub groove 22, a bridge 36 which connects the center block 32 and the shoulder block 33 is provided.

The block 31 is formed along the main groove 21, and is placed alternately with the main groove 21 in the tire circumferential direction. The blocks 31 are more specifically a pair of blocks including a center block 34 positioned on the side of the equator CL (a first block) and a shoulder block 35 positioned on the side of the ground-contacting end E2 (a second block). Between the center block 34 and the shoulder block 35, a sub groove 23 which connects two main grooves 21 in the tire rotational direction is formed, and the sub groove 23 partitions the block 31 into two blocks. As will be described later in detail, on a part of the sub groove 23, a bridge 37 which connects the center block 34 and the shoulder block 35 is provided.

The pneumatic tire 1 includes a pair of side walls 11 bulged on an outer side in the tire axial direction, and a pair of beads 12. The bead 12 is a portion which is fixed on the rim of the wheel, and has a bead core 17 and a bead filler 18. The side wall 11 and the bead 12 are formed in an annular shape along the tire circumferential direction, and form a side surface of the pneumatic tire 1. The side wall 11 extends from respective ends of the tread 10 in the tire axial direction, along the tire radial direction.

A side rib 13 may be formed on the pneumatic tire 1, at a region between each of the ground-contacting ends E1 and E2 of the tread 10 and the portion, of the side wall 11, which is bulged on the outermost side in the tire axial direction. The side rib 13 protrudes toward the outer side in the tire axial direction, and is formed in an annular shape along the tire circumferential direction. The portions from the ground-contacting ends E1 and E2 of the pneumatic tire 1 or proximate regions thereof to the left and right side ribs 13 are also called shoulders or buttress regions. The tread 10 and the side wall 11 are in general formed from rubbers of different types. The shoulder may be formed from the same rubber as the tread 10, or from a rubber that is different to that of the tread 10.

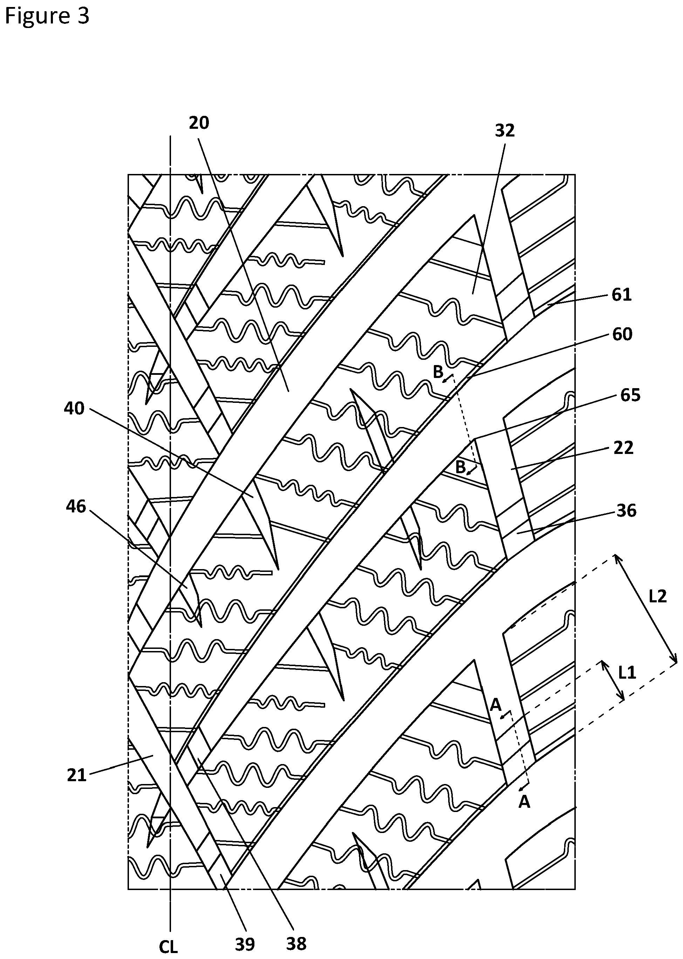

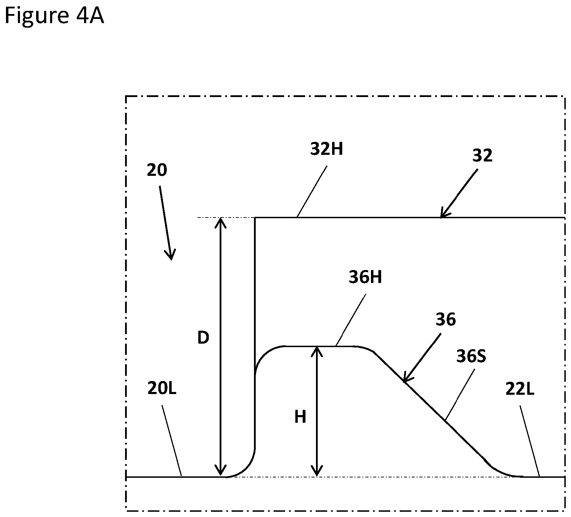

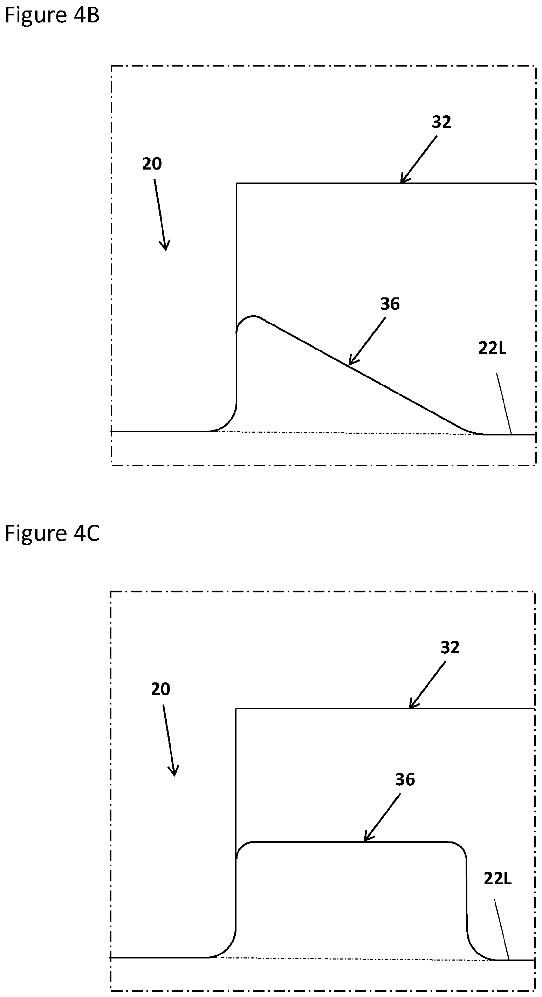

The tread pattern of the pneumatic tire 1 will now be described in detail with reference to FIGs. 2 to 4. FIG. 2 is a plan view of the pneumatic tire 1 (tread 10). FIG. 3 is a diagram showing in an enlarged manner a part of the tread pattern (region A in FIG. 2), and FIG. 4 is a cross-sectional view along a line A-A of FIG. 3.

As shown in FIG. 2, the main grooves 20 are formed and positioned with an arbitrary spacing in the tire circumferential direction. Similarly, the main grooves 21 are formed and positioned with an arbitrary spacing in the tire circumferential direction. The tread 10 has a tread pattern in which the main groove 20 and a large part of the block 30 are positioned on the side nearer to the ground-contacting end E1 than the equator CL (left-side region of the tread 10), and the main groove 21 and a large part of the block 31 are positioned on the side nearer to the ground-contacting end E2 than the equator CL (right-side region of the tread 10). The block is a portion protruding toward the outer side in the tire radial direction, and is also generally referred to as a land.

The main grooves 20 include two types of main grooves 20A and 20B having different lengths from each other. The main groove 20A is longer than the main groove 20B, and is formed in a length to extend beyond the equator CL and reaching the right-side region of the tread 10. The main groove 20B is formed in a length not extending beyond the equator CL on the left-side region of the tread 10. In addition, the center blocks 32 formed along the main groove 20 include two types of center blocks 32A and 32B having different lengths from each other. The center block 32A is longer than the center block 32B, and is formed in a length to extend beyond the equator CL and reaching the right-side region of the tread 10.

Similarly, the main grooves 21 include two types of main grooves 21A and 21B having different lengths from each other. The center blocks 34 formed along the main groove 21 include two types of center blocks 34A and 34B having different lengths from each other. The center blocks 32 are formed such that, with the center blocks 32A and 32B forming a pair, pairs of the center blocks are arranged with a variable pitch in the tire circumferential direction. The center blocks 34 are formed such that, with the center blocks 34A and 34B forming a pair, pairs of the center blocks are arranged with a variable pitch in the tire circumferential direction. The center block 34 overlaps the center block 32 in the tire circumferential direction on and near the equator CL.

At the center of the tread 10 in the tire axial direction, the pair of the center blocks 32A and 32B and the pair of the center blocks 34A and 34B are alternately placed along the tire circumferential direction. On the left-side of the tread 10, the center blocks 32A, the main grooves 20B, the center blocks 32B, and the main grooves 20A are placed in this order in a repeating manner in the tire circumferential direction. Similarly, on the right-side region of the tread 10, the center blocks 34A, the main grooves 21B, the center blocks 34B, and the main grooves 21A are placed in this order in a repeating manner in the tire circumferential direction. The pair of the center blocks 32A and 32B and the pair of the center blocks 34A and 34B are placed in a staggered manner along the equator CL.

The tread pattern according to the present embodiment is a pattern in which, in plan view, for example, the blocks 30 and 31 are placed symmetrically in the left and the right with a shift in the tire circumferential direction by a predetermined pitch, with respect to the equator CL. A shape of the block 30 is identical to a shape in which the block 31 is turned over with respect to the equator CL (this is similarly applicable to the main grooves 20 and 21). If the block 31 turned over at the equator CL is slid in the tire circumferential direction, the resulting block coincides with the block 30. The tread pattern of the present embodiment has a superior left-and-right balance, and is effective in improving maneuver stability.

The main groove 20 and the block 30 have a shape in plan view in which the main groove 20 and the block 30 are curved to be convex toward a rear side in the tire rotational direction. Similarly, the main groove 21 and the block 31 have a shape in the plan view in which the main groove 21 and the block 31 are curved to be convex toward the rear side in the tire rotational direction. The main grooves 20 and 21 and the blocks 30 and 31 are inclined with respect to the tire axial direction such that these elements are gradually positioned at a side more rear in the tire rotational direction, from the center side of the pneumatic tire 1 in the tire axial direction toward the respective sides in the axial direction.

As described above, the main grooves 20 and 21 have larger inclination angles with respect to the tire axial direction on the side of the equator CL than on the sides of the ground-contacting ends E1 and E2. In other words, the main grooves 20 and 21 gradually become more aligned with the tire axial direction, and the inclination with respect to the tire axial direction becomes gentler, from the side of the equator CL toward the ground-contacting ends E1 and E2. The inclination angles of the main grooves 20 and 21 with respect to the tire axial direction are, for example, 30°~60° or 40°~50° on the side of the equator CL.

The main groove 20 is connected to the main groove 21 near the equator CL. The main groove 20 extends from an intersection with the main groove 21 to the side of the ground-contacting end E1, and is formed beyond the ground-contacting end E1 and over the side rib 13 on the left side. The main groove 21 extends from the intersection with the main groove 20 near the equator CL to the side of the ground-contacting end E2, and is formed beyond the ground-contacting end E2 and over the side rib 13 on the right side. In the main grooves 20 and 21, bridges 38 and 39 which connect adjacent blocks are formed. With this configuration, the center blocks are connected to each other in the tire circumferential direction, resulting in improved block rigidity near the equator CL and more effective improvement of traction performance. Further, because the bridges 38 and 39 are formed only at tips of the main grooves, superior water drainage performance can be secured. Lengths of the bridges 38 and 39 along the main grooves may be shorter than lengths of slits 40 and 41.

Widths of the main grooves 20 and 21 may be constant over the entire lengths thereof, but in the present embodiment, the widths gradually become larger from the side of the equator CL toward the sides of the ground-contacting ends E1 and E2. The widths of the main grooves 20 and 21 may be, for example, maximum at or near the ground-contacting ends E1 and E2, or at or near intersections with the sub grooves 22 and 23. In this case, the water drainage performance can be improved, and a snow column shearing force for gripping and hardening the snow can be improved, resulting in superior snow performance. The main grooves 20 and 21 are formed, for example, in the same depth.

The sub grooves 22 and 23 are grooves having narrower widths (maximum widths) than the main grooves 20 and 21. The sub groove 22 extends in the tire circumferential direction to divide the block 30, and connects the main groove 20A and the main groove 20B. The sub groove 22 is inclined with respect to the tire circumferential direction such that the sub groove 22 gradually becomes further away from the ground-contacting end E1 from the front side in the tire rotational direction toward the rear side. Similarly, the sub groove 23 divides the block 31, connects the main groove 21A and the main groove 21B, and is inclined with respect to the tire circumferential direction such that the sub groove 23 gradually becomes further away from the ground-contacting end E2 from the front side in the tire rotational direction toward the rear side. The sub grooves 22 and 23 may be shallower or deeper than the main grooves 20 and 21, but are desirably formed in the same depth as the main grooves 20 and 21. In the present embodiment, the sub grooves 22 and 23 are formed in the same depth as the main grooves 20 and 21. That is, all of the main grooves 20 and 21, and the sub grooves 22 and 23 have the same depth.

On the center blocks 32 and 34, first slits 40 and 41 are formed, which extend respectively from the main grooves 20 and 21. The center blocks 32 and 34 are large blocks extending in a long distance along the main grooves 20 and 21, and the slits 40 and 41 are formed in predetermined ranges from the centers of the blocks in a longitudinal direction. The slits 40 and 41 are desirably formed on a rear side of the center blocks 32 and 34 in the tire rotational direction, from the viewpoints of wear resistance, braking performance, and the like. In the present embodiment, the slits 40 and 41 terminate in the center blocks 32 and 34 without dividing the center blocks 32 and 34. With this configuration, the number of edges can be increased, and the snow performance of the pneumatic tire 1 can be improved. Alternatively, the first slits 40 and 41 may penetrate through the center blocks 32 and 34. In this case, the snow performance and the water drainage performance of the pneumatic tire 1 can be improved.

The slit 40 may be formed in a quadrangular shape or the like in the plan view, but from the viewpoints of durability of the block, design, snow removal performance, and the like, in the present embodiment, the slit 40 has a tapered shape gradually narrowing toward the tip in the block. A length of the slit 40 is, for example, 50%~80% of a block width of a portion in which the slit 40 is formed. A depth of the slit 40 may be the deepest at an opening portion connected to the main grooves 20A and 20B, and may gradually become shallower toward the tip in the block. Depths of the slits 40 and 41 are, for example, 40%-100% of the depths of the main grooves 20 and 21.

The slit 40 of the center block 32 may be formed on a line of extension of the main groove 21A, and, similarly, the slit 41 of the center block 34 may be formed on a line of extension of the main groove 20A. In this case, a stable edge effect can be realized. In addition, for example, because the slit 40 of the center block 32 is placed opposing the main groove 21 with the main groove 20 therebetween, an effective snow pocket may be formed, and the improvement effect of the snow performance becomes more significant. No particular limitation is imposed on widths of the slits 40 and 41, and the widths of the slits 40 and 41 may be smaller than or equal to the widths of the main grooves 20 and 21 at the tips.

On the center blocks 32 and 34, second and third slits are further formed. On the center blocks 32A and 32B, second slits 42 and 43 are respectively formed, which extend from opposing positions with the main groove 20B therebetween, and which terminate in the respective blocks. In addition, on the center block 32A, a third slit 46 is formed between the slit 42 and the end of the block on the side of the equator CL. Second slits 44 and 45 are formed respectively on the center blocks 34A and 34B, and a third slit 47 is formed on the center block 34A.

The slits 42, 43, 44, and 45 may be formed in depths similar to the slits 40 and 41, but are desirably formed shallower than the slits 40 and 41 from the viewpoints of the rigidity of the block, durability, and the like. The slits 42, 43, 44, and 45 are formed, for example, in depths of 15%-30% of the depths of the main grooves 20 and 21. Similar to the slits 40 and 41, the slits 42, 43, 44, and 45 have a tapered shape gradually narrowing toward tips in the blocks. Further, the depths of the slits 42, 43, 44, and 45 are deepest at opening portions connected to the main grooves 20 and 21, and gradually become shallower toward the tips in the blocks. No particular limitation is imposed on widths of the slits 42, 43, 44, and 45, but the widths are desirably smaller than or equal to the widths of the slits 40 and 41.

Similar to the slits 40 and 41, the slits 46 and 47 have a tapered shape gradually narrowing toward tips in the blocks. Depths of the slits 46 and 47 are deepest at opening portions connected to the main grooves 20 and 21, and gradually become shallower toward the tips in the blocks. The slits 46 and 47 are formed, for example, in depths of 15%~30% of the depths of the main grooves 20 and 21. Lengths of the slits 46 and 47 are shorter than the lengths of the slits 40 and 41, and may be 20%~50% of the block widths of the portions in which the slits 46 and 47 are formed.

The slit 46 may be formed on a line of extension of the main groove 21B, and, similarly, the slit 47 may be formed on a line of extension of the main groove 20B. Similar to the other slits, the slits 46 and 47 contribute to formation of the snow pocket and improvement of the edge effect, while suppressing reduction of the block rigidity. No particular limitation is imposed on widths of the slits 46 and 47, but the widths are desirably smaller than or equal to the width of the main groove 21B at the tip.

On each of the blocks of the tread 10, a sipe is formed. The sipe is a groove having a narrower width than the main grooves 20 and 21, and the sub grooves 22 and 23, and forms an edge for gripping snow and ice. In addition, the sipe realizes a water drainage effect through the capillary action, and contributes to improvement of braking/driving characteristic and maneuver stability on a snow-ice road surface. In general, a groove having a groove width of less than or equal to 1.0 mm is defined as the sipe. The center blocks 32 and 34 have a straight sipe 50 (first sipe) formed in a straight line in the plan view, a first wave-shape sipe 51 (second sipe) formed in a wavy shape, and a second wave-shape sipe 52 (third sipe) formed in a wavy shape and having a larger amplitude of the wave than the wave-shape sipe 51.

The shoulder blocks 33 are arranged and placed in one line on the side, of the tread 10, near the ground-contacting end E1, with an arbitrary spacing in the tire circumferential direction. The line of shoulder blocks 33 is formed from one type of blocks having similar shapes to each other. Similarly, a line of shoulder blocks 35 is formed with one type of blocks arranged in one line with an arbitrary spacing in the tire circumferential direction. The shoulder blocks 33 and 35 have shapes in plan view in which the blocks are gently curved along the main grooves 20 and 21, and inclination angles thereof with respect to the tire axial direction are slightly larger on the side of the sub grooves 22 and 23 than on the side of the side rib 13.

On each of the shoulder blocks 33 and 35, shoulder sipes 53 and 54 are formed. The shoulder sipe 53 extends from the sub groove 22, beyond the ground-contacting end E1, and to the buttress region, and is formed in a length not reaching the side rib 13. A plurality of the shoulder sipe 53 (for example, three shoulder sipes 53) are formed along a longitudinal direction of the shoulder block 33. A plurality of the shoulder sipes 54 are formed along a longitudinal direction of the shoulder block 35, and extend from the sub groove 23, beyond the ground-contacting end E2, and to the buttress region. At least a part of the shoulder sipes 53 and 54 may be formed in a wave shape.

On the center blocks 32 and 34, and the shoulder blocks 33 and 35, inclined surfaces 60, 62, 61, and 63 inclined with respect to an upper surface of the respective block are formed on a side wall, among the side walls along the main grooves 20 and 21, on the front side in the tire rotational direction. With this configuration, the traction performance of the pneumatic tire 1 can be improved. The inclined surfaces 60, 62, 61, and 63 are inclined, for example, from the upper surfaces of the blocks 30 and 31 toward bottom surfaces of the main grooves 20 and 21. A large part of the inclined surfaces 60, 62, 61, and 63 may be flat and inclined at approximately constant angles. The inclined surfaces 60 and 62 are formed, for example, over the entire side walls of the center blocks 32 and 34 on the front side in the tire rotational direction, and the inclined surfaces 61 and 63 are formed, for example, over the entire side walls of the shoulder blocks 33 and 35 on the front side in the tire rotational direction.

In plan view, of the vertices of the center blocks 32 and 34 on the rear side in the tire rotational direction, portions of vertices 65 and 66 forming an acute angle are chamfered. With this configuration, areas of the center blocks 32 and 34 that contact the ground during braking can be increased, and the traction performance of the pneumatic tire 1 can be improved. A size of the chamfered portion is, for example, in a range of 1 mm~5 mm, from the vertices 65 and 66 along the sides, in the plan view. A depth of the chamfered portion is, for example, in a range of 1 mm~5 mm from an upper surface of the block.

Next, the structures of the main grooves 20 and 21 and the sub groove 22 and 23 will be described in detail with reference to FIGs. 3 to 5. FIG. 3 is an enlarged view of a region A in FIG. 2. In the following, the structures of the main groove 20 and the sub groove 22 will be described with the side of the ground-contacting end E1 (left-side region of the tread 10) as an example. Because the side of the ground-contacting end E2 (right-side region of the tread 10) has a turned-over structure of the side of the ground-contacting end E1 with the equator CL therebetween as described above, the following description of the structure on the side of the ground-contacting end E1 is also applicable to the structure on the side of the ground-contacting end E2.

First, the bridge 36 formed in the sub groove 22 will be described. The bridge 36 is formed in the sub groove 22 on the front side in the tire rotational direction, and connects the center block 32 positioned on the side of the equator CL and the shoulder block 33 positioned on the side of the ground-contacting end E1. With this configuration, an in-place contraction around the sub groove 22 can be suppressed, and water drainage performance of the pneumatic tire 1 can be improved. In addition, with the provision of the bridge 36 on the front side in the tire rotational direction, the traction performance during braking can be improved.

As shown in FIG. 3, a length L1 of the bridge 36 is desirably less than or equal to 50% of a length L2 of the sub groove 22. When L1/L2>0.5, influences of the reduction of the volume of the sub groove 22 become significant, and the snow performance may be degraded. In addition, in order to significantly improve the water drainage performance and the traction performance as described above, it is desirable that L1/L2≥0.1.

FIG. 4A is a diagram for explaining a shape of the bridge 36 in the present embodiment, and is a cross-sectional view along a line B-B of FIG. 3. As shown in FIG. 4A, a shape of the cross section of the bridge 36 along the sub groove 22 is an approximate trapezoid. That is, the bridge 36 has an upper surface 36H approximately parallel to a bottom surface 20L of the main groove 20, and a slope 36S connecting a bottom surface 22L of the sub groove 22 and the upper surface 36H. Because the bridge 36 has the slope 36S, water can more easily flow from the sub groove 22 to the main groove 20, and as a consequence, the water drainage performance of the pneumatic tire 1 is improved. In addition, from the viewpoint of improvement of the water drainage performance, a vertex portion of the bridge 36 having the trapezoidal shape in FIG. 4 is desirably a curved line.

A height H of the bridge 36 is 20%~60% of a depth D of the main groove 20. The height H of the bridge 36 is a height of the upper surface 36H with reference to the bottom surface 20L. The depth D of the main groove 20 is a depth of the bottom surface 20L with reference to an upper surface 32H of the center block 32. In the present embodiment, the depths of the main groove 20 and the sub groove 22 are equal to each other, and the bottom surface 20L and the bottom surface 22L exist on the same plane.

The shape of the bridge 36 is not limited to the example structure shown in FIG. 4A. FIGs. 4B and 4C are diagrams corresponding to FIG. 4A, and showing other configurations of the present embodiment. As shown in FIG. 4B, the shape of the cross section of the bridge 36 along the sub groove 22 may be an approximate triangle. Alternatively, as shown in FIG. 4C, the shape of the cross section of the bridge 36 along the sub groove 22 may be an approximate quadrangle.

As described, the side of the ground-contacting end E2 has a similar structure, and the bridge 37 has the same structure as the bridge 36. The bridges 38 and 39 may have structures different from the bridges 36 and 37, but desirably, the bridges 38 and 39 have the same structure as the bridges 36 and 37.

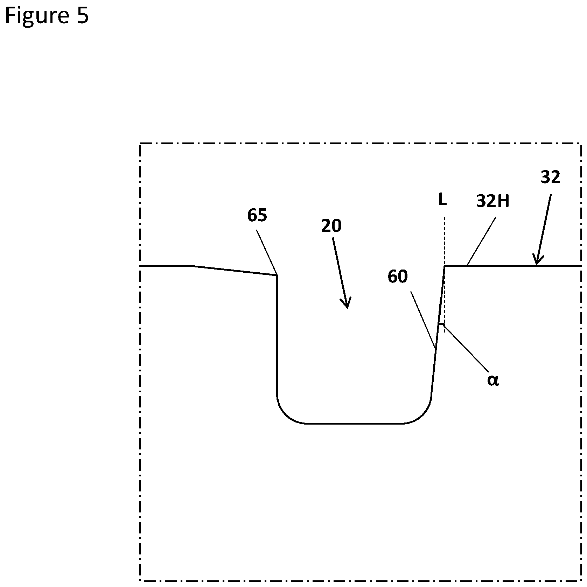

Next, with reference to FIG. 5, a structure of the main groove 20 will be described. FIG. 5 is a cross-sectional view along a line B-B of FIG. 3. As shown in FIG. 5, among side walls along the main groove 20, on a side wall of the center block 32 on the front side in the tire rotational direction, the inclined surface 60 is formed. An inclination angle α of the inclined surface 60 is an angle between a line L perpendicular to the upper surface 32H of the center block 32 and the inclined surface 60, and as the inclination angle α becomes larger, the inclination of the inclined surface 60 becomes more gentle. The inclination angle α satisfies, for example, a condition of 1°≤α≤10°. In addition, among the side walls along the main groove 20, a portion of a vertex 65 of a side wall of the center block 32 on a rear side in the tire rotational direction is chamfered.

An inclination angle β of the inclined surface 61 formed on the shoulder block 33 positioned on the side of the ground-contacting end E1 is desirably larger than the inclination angle α of the inclined surface 60 formed on the center block 32 positioned on the side of the equator CL. Because a larger load with respect to the tire rotational direction is applied during braking on the shoulder block 33 than on the center block 32, by setting the angles to α>β, the traction performance of the pneumatic tire 1 can be more significantly improved. The inclination angle β of the inclined surface 61 is an angle between a line perpendicular to an upper surface of the shoulder block 33 and the inclined surface, and as the inclination angle β becomes larger, the inclination of the inclined surface 61 become more gentle. The inclination angle β satisfies, for example, a condition of 1°≤β≤10°.

The inclination angle α and the inclination angle β may satisfy a condition of 1.1≤α/β≤2. When the value of α/β is within this range, the shoulder block 33 can be more effectively protected from the load during braking, and the traction performance of the pneumatic tire 1 can thus be further improved.

As described, the side of the ground-contacting end E2 has a similar structure. The center block 34 has the same structure as the center block 32, and the shoulder block 35 has the same structure as the shoulder block 33.

The forms of the blocks 30 and 31 are not limited to the example configuration shown in the present embodiment. For example, the blocks 30 and 31 may be formed from a center block, a mediate block, and a shoulder block. In this case, on the mediate block, similar to the center block and the shoulder block, an inclined surface may be formed on a side wall on the front side in the tire rotational direction. The inclination of the inclined surface of the mediate block is, for example, equal to the inclination of the inclined surface of the center block. Further, of the vertices of the mediate block on the rear side in the tire rotational direction, a portion of a vertex forming an acute angle may be chamfered. In addition, a bridge similar to the bridges 36 and 37 of the present embodiment may be formed in the sub groove between the mediate block and the shoulder block. Similarly, a bridge similar to the bridges 36 and 37 of the present embodiment may be formed in the sub groove between the center block and the mediate block.

As described, the pneumatic tire according to the present invention has superior traction performance. Because the block forming the tread of the pneumatic tire has an inclined surface inclined with respect to the upper surface of the block on a side wall on the front side in the tire rotational direction, among the side walls along the main groove, the traction performance during braking can be improved. Further, because a portion of a vertex forming an acute angle, among the vertices of the first block positioned on the equator side on the rear side of the first block in the tire rotational direction, is chamfered, the traction performance of the pneumatic tire can be further improved.

### REFERENCE SIGNS LIST

- 1: pneumatic tire
- 10: tread
- 11: side wall
- 12: bead
- 13: side rib
- 14: carcass
- 15: belt
- 16: inner liner
- 17: bead core
- 18: bead filler
- 20: main groove
- 20A: main groove
- 20B: main groove
- 21: main groove
- 21A: main groove
- 21B: main groove
- 22: sub groove
- 23: sub groove
- 30: block
- 31: block
- 32: center block
- 32A: center block
- 32B: center block
- 34: center block
- 34A: center block
- 34B: center block (first block)
- 33: shoulder block
- 35: shoulder block (second block)
- 36: bridge
- 36H: upper surface
- 36S: slope
- 37: bridge
- 38: bridge
- 39: bridge
- 40: slit
- 41: slit
- 42: slit
- 43: slit
- 44: slit
- 45: slit
- 46: slit
- 47: slit
- 50: straight sipe
- 51: wave-shape sipe
- 52: wave-shape sipe
- 53: shoulder sipe
- 54: shoulder sipe
- 60: inclined surface
- 61: inclined surface
- 62: inclined surface
- 63: inclined surface
- 65: vertex
- CL: tire equator
- E1: ground-contacting end
- E2: ground-contacting end

## Claims

1. A pneumatic tire (1) having a tread (10) and for which a direction of rotation is designated, wherein
the tread (10) includes:
a main groove (20, 21) which extends from a side of an equator (CL) toward a side of a ground-contacting end (E1, E2), and which has an inclination with respect to a tire axial direction which is larger on the side of the equator (CL) than on the side of the ground-contacting end (E1, E2); and
a block (30, 31) which is formed along the main groove (20, 21), and which is placed alternately with the main groove (20, 21) in a tire circumferential direction,
the block (30, 31) includes a first block (32, 34) positioned on the side of the equator (CL), and
a second block (33, 35) positioned on the side of the ground-contacting end (E1, E2), and
on the first block (32, 34) and the second block (33, 35), an inclined surface (60, 61, 62, 63) which is inclined with respect to an upper surface of the respective block is formed on a side wall, among side walls along the main groove (20, 21), on a front side in a tire rotational direction,
an inclination angle α of the inclined surface (61, 63) formed on the second block (33, 35) is larger than an inclination angle β of the inclined surface (60, 62) formed on the first block (32, 34), wherein the inclination angle α of the inclined surface (60) is an angle between a line (L) perpendicular to the upper surface (32H) of the center block (32) and the inclined surface (60), and the inclination angle β of the inclined surface (61) is an angle between a line perpendicular to an upper surface of the shoulder block (33) and the inclined surface (61), **characterized in that**
the angles α and β satisfy a condition of 1.1≤α/β≤2.

2. The pneumatic tire (1) according to claim 1, wherein
in a plan view, a portion of a vertex of the first block (32, 34) on a rear side in the tire rotational direction, forming an acute angle is chamfered.

3. The pneumatic tire (1) according to claim 1 or 2, wherein
the angle β satisfies a condition of 1°≤β≤10°.

## Patentansprüche

1. Luftreifen (1) mit einer Lauffläche (10), für den eine Drehrichtung festgelegt ist, wobei die Lauffläche (10) beinhaltet:
eine Hauptnut (20, 21), die sich von einer Seite eines Äquators (CL) zu einer Seite eines bodenkontaktierenden Endes (E1, E2) erstreckt und die in Bezug auf eine Axialrichtung des Reifens eine Neigung aufweist, die auf der Seite des Äquators (CL) größer ist als auf der Seite des bodenkontaktierenden Endes (E1, E2); und
einen Block (30, 31), der entlang der Hauptnut (20, 21) ausgebildet ist und abwechselnd mit der Hauptnut (20, 21) in einer Reifenumfangsrichtung angeordnet ist,
wobei der Block (30, 31) einen ersten Block (32, 34), der auf der Seite des Äquators (CL) positioniert ist, und einen zweiten Block (33, 35) beinhaltet, der auf der Seite des bodenkontaktierenden Endes (E1, E2) positioniert ist, und
auf dem ersten Block (32, 34) und dem zweiten Block (33, 35) eine geneigte Fläche (60, 61, 62, 63) ist, die in Bezug auf eine Oberseite des jeweiligen Blocks geneigt ist, an einer Seitenwand unter den Seitenwänden entlang der Hauptnut (20, 21) auf einer Vorderseite in einer Reifenrotationsrichtung ausgebildet,
ein Neigungswinkel a der geneigten Fläche (61, 63), die auf dem zweiten Block (33, 35) gebildet ist, größer ist als ein Neigungswinkel β der geneigten Fläche (60, 62), die am ersten Block (32, 34) gebildet ist, wobei der Neigungswinkel a der geneigten Fläche (60) ein Winkel zwischen einer Linie (L), die senkrecht zur Oberseite (32H) des Mittelblocks (32) und der geneigten Fläche (60) ist, und der Neigungswinkel β der geneigten Fläche (61) ein Winkel zwischen einer Linie senkrecht zu einer Oberseite des Schulterblocks (33) und der geneigten Fläche (61) ist, **dadurch gekennzeichnet, dass**
die Winkel α und β eine Bedingung 1,1 ≤ α/β ≤ 2 erfüllen.

2. Luftreifen (1) gemäß Anspruch 1, wobei
in einer Draufsicht ein Abschnitt einer Ecke des ersten Blocks (32, 34) auf einer Rückseite in Reifendrehrichtung, der einen spitzen Winkel bildet, abgeschrägt ist.

3. Luftreifen (1) gemäß Anspruch 1 oder 2, wobei
der Winkel β eine Bedingung 1°≤β≤10° erfüllt.

## Revendications

1. Bandage pneumatique (1) comprenant une bande de roulement (10), et pour lequel un sens de rotation est désigné,
ladite bande de roulement (10) comprenant :
une rainure principale (20, 21) qui s'étend depuis un côté d'un équateur (CL) vers un côté d'une fin de contact au sol (E1, E2), et qui présente une inclinaison par rapport à la direction axiale du pneu, l'inclinaison étant supérieure du côté de l'équateur (CL) que du côté de la fin de contact au sol (E1, E2) ; et
un bloc (30, 31) qui est formé le long de la rainure principale (20, 21), et qui est placé en alternance avec la rainure principale (20, 21) dans une direction circonférentielle du pneu,
le bloc (30, 31) comprenant un premier bloc (32, 34) positionné du côté de l'équateur (CL) et un deuxième bloc (33, 35) positionné du côté de la fin de contact au sol (E1, E2), et sur le premier bloc (32, 34) et le deuxième bloc (33, 35), une surface inclinée (60, 61, 62, 63) qui est inclinée par rapport à la surface supérieure du bloc respectif est formée sur une paroi latérale, parmi des parois latérales le long de la rainure principale (20, 21), sur une face avant dans le sens de rotation du pneu,
un angle d'inclinaison α de la surface inclinée (61, 63) formée sur le deuxième bloc (33, 35) est supérieur à un angle d'inclinaison β de la surface inclinée (60, 62) formée sur le premier bloc (32, 34), l'angle d'inclinaison α de la surface inclinée (60) étant un angle entre une ligne (L) perpendiculaire à la surface supérieure (32H) du bloc central (32) et la surface inclinée (60), et l'angle d'inclinaison β de la surface inclinée (61) étant un angle entre une ligne perpendiculaire à une surface supérieure du bloc d'épaule (33) et la surface inclinée (61), **caractérisé en ce que** les angles α et β satisfont à une condition de 1,1≤α/β≤2.

2. Bandage pneumatique (1) selon la revendication 1, dans lequel
dans une vue en plan, une partie d'un sommet du premier bloc (32, 34) sur une face arrière dans le sens de rotation du pneu qui forme un angle aigu est chanfreinée.

3. Bandage pneumatique (1) selon la revendication 1 ou 2, dans lequel
l'angle β satisfait à une condition de 1°≤β≤10°.
